# EUROPEAN PATENT APPLICATION

(11) **EP 4 056 467 A1**
(43) Date of publication of application: **14.09.2022**
(21) Application number: 21161961.4
(22) Date of filing: 11.03.2021
(51) Int. Cl.: B64C 27/08, B64C 27/20, B64C 39/00, B64C 39/02

(54) **AN UNMANNED AERIAL VEHICLE**

(71) Applicant: Viking Drone ApS, 5000 Odense C (DK)
(72) Inventor: Gupta, Rasmus Kumar Udesen, 5000 Odense C (DK)
(74) Representative: Dragsted Partners A/S

(57) **Abstract**

An unmanned aerial vehicle comprising: a housing comprising an outer surface and an inner surface that forms a cavity, at least one propulsion device adapted to move the chassis in three dimensions, one or more first electrical components configured to provide a controller that generates and/or receives flight control signals indicating a position of the unmanned aerial vehicle in air space and wherein the flight controller controls the flight propulsion device to move the UAV to locations in the space indicated by the flight control signals, wherein the housing comprises a thermal conductor, having an inner surface and an outer surface, where the outer surface faces the surrounding environment, and the inner surface is in thermal communication with at one or more of the electrical components.

## Description

### TECHNICAL FIELD

An unmanned aerial vehicle comprising: a housing comprising an outer surface and an inner surface that forms a cavity, at least one propulsion device adapted to move the chassis in three dimensions.

### BACKGROUND

Unmanned aerial vehicles (UAVs) are used widely in a plurality of applications, where UAVs may be used for applications that may e.g. not be accessible for humans, or may be used in regions or areas that are dangerous for humans. However, in recent times UAVs have been found to be very useful in performing operations where the use of human operators or vehicles that are capable of having human operators are too expensive, and a UAV may be utilized for such an operation at a low cost. Examples of this may e.g. be aerial photography, where previously a camera would be mounted to a helicopter or an airplane to perform aerial photography, where UAVs that have mounted cameras have overtaken a large part of this market.

UAVs may be remotely controlled by a human operator or may also be controlled by a CPU that is capable of having autopilot functions so that a UAV may operate independently of a human operator. UAVs come in many shapes and sizes, but a common inexpensive form of a UAV may e.g. be a quadcopter which has had great commercial success, where the vehicle has the form of a helicopter having four rotors that are independently controlled to stabilize and control the UAV.

Helicopter UAVs are being used in a plurality of situations today, where a UAV may specifically designed for a specific purpose, where the specific purpose decides what kind of equipment the UAV is supposed to have and how much computing power is needed in the UAV. The magnitude of computing power in an UAV is an issue that has to be dealt with in the design phase of the UAV, as an increase in computing power will increase the need for cooling the computing hardware. As UAVs are adapted to be utilized in all kinds of weather, the housings or bodies of the UAVs need to be hermetically sealed, or at least weatherproofed so that liquid, vapor and/or moisture in the air does not penetrate the body to cause damage to the electronics of the UAV.

This may cause problems in getting rid of excess heat that may e.g. come from a CPU, which may cause the CPU to malfunction or slow down during the use of the UAV.

It is an object of the present invention to overcome the above problems.

### DESCRIPTION

In accordance with the invention there is provided an unmanned aerial vehicle comprising: a housing comprising an outer surface and an inner surface that forms a cavity, (may close off the cavity from the outside) at least one propulsion device adapted to move the chassis in three dimensions, one or more first electrical components configured to provide a controller that generates and/or receives flight control signals indicating a position of the unmanned aerial vehicle in air space and wherein the flight controller controls the flight propulsion device to move the UAV to locations in the space indicated by the flight control signals, wherein the housing comprises a thermal conductor, having an inner surface and an outer surface, where the outer surface faces the surrounding environment, and the inner surface is in thermal communication (thermally connected) with one or more of the electrical components.

The unmanned aerial vehicle (UAV) may be provided with electrical components that may be utilized for flight controls of the UAV. The electrical components may be of the kind that generate thermal energy when powered, such as a processor or CPU, as well as memory, electrical connectors, communication devices that allow the UAV to be in communication with one or more peripheral devices and/or a remote device which can provide control of the UAV. The UAV may be provided with automated flight controls, where instructions may be input to the controls to provide directional, locational and other relevant information to provide automated navigation instructions in an outdoor and/or indoor environment.

An issue with electrical components that create thermal energy may be that the efficiency of the electrical component may decrease if it becomes too warm, and it is therefore very good to provide the electrical component with an option to transfer the thermal energy from the electrical component and towards the environment. This is well known in the Computer industry, where CPU's and graphical processors (GPU) need cooling in order to operate effectively. By providing the UAV with a thermal conductor, it may be possible to include highly effective electrical components, such as CPU's and GPU's inside the UAV, without risking that the components will lose their efficiency and/or shut/break down due to overheating.

The housing may define a cavity of the UAV, where the cavity may include one or more of relevant components that are necessary or advantageous to operate the UAV. The cavity may be a closed cavity, where the housing and/or other elements of the UAV may ensure that the cavity is sealed off from the outside environment. The sealing of the cavity may be advantageous where the UAV may be operated in weather conditions where corrosive and/or damaging elements are present, such as dust, moisture and/or vapor. By sealing off the cavity the electrical components and/or elements of the UAV that are sensitive to the environment may be protected. The sealing of the housing may however create an issue with thermal energy that may be generated inside the housing, as the sealed housing may have a relatively low thermal communication with the outside environment, and where the thermal energy may accumulate inside the housing. The thermal energy inside the housing may create an interior environment where the electrical components do not operate effectively or may cease to operate due to a too warm environment inside the housing.

The present invention solves the thermal issue of the UAV by providing a housing where the housing comprises a thermal conductor, where the thermal conductor may be in thermal communication with one or more of the electrical components of the UAV. This means that the thermal energy that may be emitted or generated by the electrical components may be thermally communicated or thermally connected with the thermal conductor of the housing, where the inner surface of the thermal conductor is in thermal communication with the electrical component and where the outer surface faces the surrounding environment and where the outer surface may dissipate the thermal energy to the environment. The thermal conductor may be of a the kind that conveys thermal energy from the inner surface of the thermal conductor to the outer surface of the conductor, in order to allow the thermal energy that is created inside the cavity of the UAV to be transported to the environment, in order to minimise the risk that the electrical components overheat and/or to ensure an optimal thermal environment for the electrical components inside the cavity of the housing.

In one exemplary embodiment the housing may comprise a first part and a second part. The first and the second part may each define a part of the cavity of the housing, where the inner surface of the first part may define a part of the cavity and the inner surface of the second part may define a part of the cavity. Optionally, the inner surface of the first part may be defined as a part of the cavity that is separate and/or different from the part of the cavity that is defined by the inner part of the second part. The housing may be formed in at least two parts, where the first part may be connected to the second part. The first part and/or the second part may comprise a thermal conductor allowing thermal energy to be conveyed from the inside of the cavity to the outside environment of the housing.

In one exemplary embodiment the first part of the housing may be in thermal communication with the second part of the housing. By providing the first part of the housing in thermal communication with the second part of the housing, it may be possible to convey thermal energy which may be present in the first part to the second part, and vice versa. Thus, by providing thermal communication between the first part and the second part, the first part and the second party may increase the outside area of the housing where heat may be transferred from the housing to the outside environment. The first part may be thermally conducive and/or the second part may be thermally conductive, so that the first part and/or the second part may store and/or transport thermal energy from inside of the cavity to the outside of the cavity.

The thermal communication between the first part and the second part may be increased by providing a thermally conductive element in a region between the first part and the second part, or in an area that is positioned in between a contact surface on the first part and a contact surface of the second part. The thermally conductive element may be a thermal paste or a thermally conductive seal, where the thermally conductive element may also provide a sealing between the first part and the second part, ensuring that a contact area between the first part and the second part seals off the cavity from the outer environment of the housing.

In one exemplary embodiment the inner surface of the thermal conductor may correspond to the inner surface of the housing, and/or the outer surface of the thermal conductor corresponds the outer surface of the housing. This means that the thermal conductor may be at least part of the housing and/or the wall of the housing. The thermal conductor may be a part of a wall of the housing, where the thermal conductor provides the inner surface and/or the outer surface of the housing. In one embodiment the thermal conductor may define at least 40% of the housing, or optionally at least 50% of the housing, where the thermal conductor may define a part of the housing of the UAV. This means that e.g. a first part and/or a second part of the housing may at least partly be the thermal conductor. The thermal conductor of the housing may e.g. define the entire first part and/or second part of the housing, meaning that the entire outer surface of the first part and/or the second part may be in thermal communication with the environment, allowing the entire first part and/or the second part to convey thermal energy from the inside of the cavity to the environment.

In one exemplary embodiment the thermal conductor may have a heat transfer rate above 10 W/mK, more specifically above 20 W/mK, more specifically above 50 W/mK, or more specifically above 100 W/mK. For many UAVs the housing may be made of a plastic material, where the plastic material has a very low heat transfer rate (between 0,35 - 0,6 W/mK), where the heat transfer rate is in the area where the plastic effectively insulates the cavity from the outside. However, by providing a housing comprising a thermal conductor having a high enough heat transfer rate, it is possible to transfer the heat from the cavity and to the environment. The thermal conductor may have a heat transfer rate which allows heat to be conveyed via the thermal conductor from the cavity to the environment surrounding the housing. By having a thermal conductor that has a heat transfer rate above 10 W/mK, more specifically above 20 W/mK, more specifically above 50 W/mK, or where the heat transfer rate may be above 200 W/mK, allowing the thermal energy to be transferred quickly from the cavity to the environment. Furthermore, the heat transfer rate may be increased by increasing the volume of the thermal conductor, and thereby increasing the thermal storage capabilities and an increase in surface area that is in contact with the outside environment to increase the area where heat energy may be conveyed from the thermal conductor to and from the environment.

In one exemplary embodiment the housing (or alternatively the first part and/or the second part of the housing) may be constructed of a material that is at least 40% of a metallic composition, more specifically at least 60% of a metallic composition, more specifically at least 80% of a metallic composition. The first part and/or the second part of the housing may be constructed of a material that is at least 40% of a metallic composition, more specifically at least 60% of a metallic composition, more specifically at least 80% of a metallic composition. Within the context of the present disclosure, the percentage of metallic composition means the total volume of housing material, so that when a material has at least 40% of a metallic composition, means that 40% of the total volume of material present in the housing is made of a metallic composition. The metallic composition may be a composition that has a high heat transfer rate, allowing the metallic composition to transfer thermal energy from the cavity of the housing to the environment. By increasing the total volume of a metallic component in the housing, first part and/or the second part, it may be possible to provide increased heat transfer from the cavity to the environment. The metallic composition of the housing may be seen as a part of the thermal conductor.

In one exemplary embodiment the housing may be made of a material comprising an aluminium alloy. The aluminium alloy may be part of the housing or may be the first part and/or the second part of the housing. The aluminium alloy has a thermal conductivity rate of approximately 200 W/mK, and may be light enough to be used together with a UAV, without impeding the flight controls or the flight capabilities of the UAV. The housing alloy may also operate as the chassis for the UAV. In one example the aluminium alloy may provide enough rigidity and lightness to be used as a chassis, where e.g. rotor arms, the internal and/or external components have a solid base to be attached to, where the chassis provides counterforce for the components to fix them securely in their correct position.

In one exemplary embodiment the one or more first electrical components may be positioned on an electrical base plate. The electrical base plate may e.g. be in the form of a circuit board or a plurality of circuit boards that are connected to each other, providing electrical communication between electrical components of the UAV. The electrical base plate may carry a part of, or a majority of the electrical components that are positioned inside the cavity of the UAV. The power source, e.g. battery, may be separated from the electrical base plate inside or outside the cavity.

In one exemplary embodiment the electric base plate may be attached (connected) with the inner surface of the housing, and where a vibration dampening device may be provided between the housing and the base plate to dampen vibration from the housing to the electric base plate. This means that when the propulsion device is propelling the UAV, the vibration that comes from the electrical motors/and or the propulsion device are dampened before the vibration reaches the electrical base plate. By vibration dampening the electrical base plate it is possible to increase the lifespan of the electrical components, or that electrical components that are not vibration proof may be utilized to operate the UAV. This means that the cost of the UAV may be reduced or the operation cost of the UAV may be reduced.

In one exemplary embodiment the thermal communication between the one or more electrical components and the housing may be in the form of a thermal element having a first surface being in contact with the one or more electrical component and a second surface being in contact with the inner surface of the thermal conductor. The thermal element may be of a form that is capable of conveying thermal energy effectively from the first surface to the second surface in order to convey thermal energy from an electric component to the thermal conductor of the housing. The thermal element may be positioned in an area or region between the thermal conductor and/or the housing and the at least one electrical component. It may be conceived that the thermal conductor may be in thermal communication with two or more electrical components.

In one exemplary embodiment the thermal element may be a vibration dampening element, such as paraffin wax silicon compound comprising thermal conductive powder and/or a thermal paste. The thermal element may be a thermal pad, where the thermal pad is in contact with the electrical component and is also in contact with the thermal conductor of the housing. By providing the thermal element in the form of a vibration dampening element it is possible to insulate the electrical component from vibrations that may be in the housing during operation of the UAV.

In accordance with the present disclosure, the term "vibration dampening" may also be understood as vibration isolation, which is the process of isolating an object, such as a piece of equipment, from the source of vibrations. Vibrations propagate via mechanical waves and certain mechanical linkages conduct vibrations more efficiently than others. Passive vibration isolation makes use of materials and mechanical linkages that absorb and damp these mechanical waves. Active vibration isolation involves sensors and actuators that produce disruptive interference that cancels-out incoming vibration. The thermal element may be a passive vibration dampening element or may be an active vibration dampening element. The purpose of the thermal element may be seen as the thermal transferring and may also be seen as an element that is capable of absorbing or damp mechanical waves that may be affecting the housing or the thermal conductor of the housing.

In one exemplary embodiment the housing may comprise one or more connectors for attaching a rotor arm (propulsion) to the housing, where the connector may comprise electrical connections for powering and controlling the rotor and/or mechanical connection for mechanically fixing the rotor arm to the housing. The one or more connectors may be adapted to allow a rotor arm, or a propulsion arm, to be releasably connected to the housing and/or the chassis of the housing. The connectors may be male/female connectors, where e.g. the electrical connections are plug and socket connections. The mechanical fastening of the arms to the housing may be obtained by providing mechanical fasteners, that in an open position allows the arm to be inserted into the connection while in a closed position may fix the arm relative to the housing.

In one exemplary embodiment the housing may comprise one or more electrical and/or data interfaces at an outer surface of the housing. The electrical interface and/or the data interface may be in electrical communication with one or more electrical components of the UAV, where the electrical interface may provide peripheral devices with both a power source and/or data interface with the components of the UAV. The electrical interface and/or the data interface may be in the form of electrical connectors on or in the outer surface of the housing, where the connectors may e.g. protrude through the housing. The electrical connectors may be substantially flush with the outer surface of the housing, allowing the electrical connections of the peripheral device to be connected to the electrical components of the UAV.

In one exemplary embodiment the unmanned aerial vehicle may be a multi-rotor vehicle, where the propulsion device may comprise at least 4 rotors and at least one electrical motor to propel the at least 4 rotors. A 4 rotor UAV is often seen as a Quadcopter UAV, where the four rotors provide a propulsion at 4 different peripheral areas of the housing. In accordance with the invention the UAV may have 5, 6 or even further rotors, or may have dual rotors on each rotor arm, and where the housing may have 4, 5, 6 or further numbered rotor arms.

In one exemplary embodiment the housing may comprise at least a first attachment device, configured to attach a peripheral device to the housing. The first attachment device may be a bracket, where the bracket may have connection slots/elements that are adapted to receive one or more peripheral devices.

### BRIEF DESCRIPTION OF THE DRAWINGS

The following is an explanation of exemplary embodiments with reference to the drawings, in which
Fig. 1 is an exploded perspective view of a housing of a UAV seen from above in accordance with the present disclosure, and
Fig. 2 is an exploded perspective view of a housing of a UAV seen from below in accordance with the present disclosure.

### DETAILED DESCRIPTION

Various exemplary embodiments and details are described hereinafter, with reference to the figures when relevant. It should be noted that the figures may or may not be drawn to scale and that elements of similar structures or functions are represented by reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

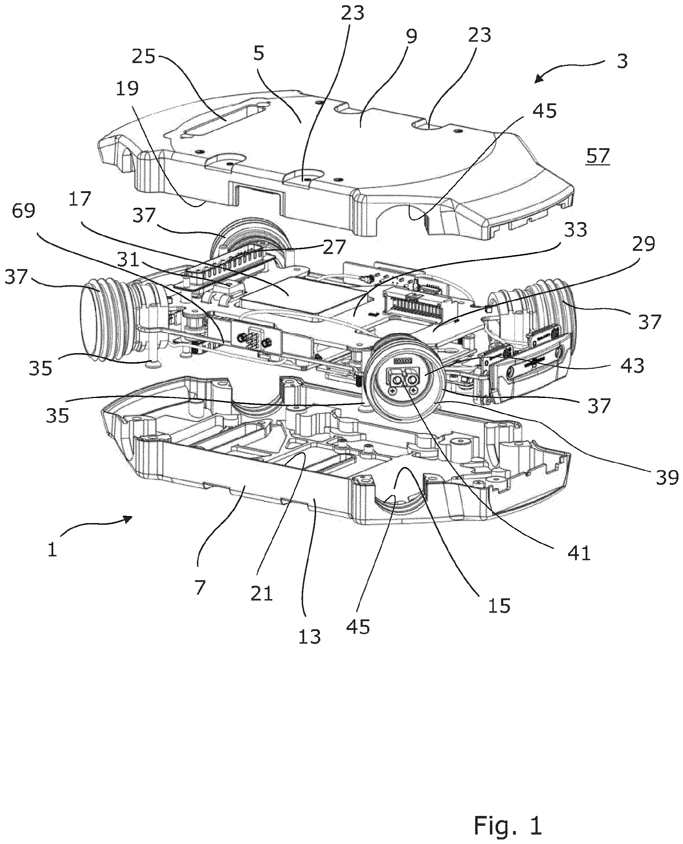

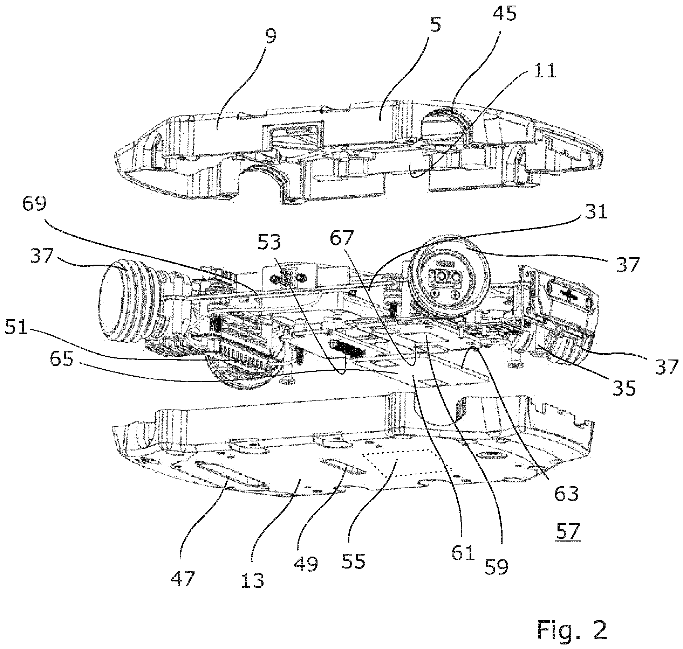

The components having reference numbers shown in Fig. 1 may be applied in the same manner for the same components seen in Fig. 2

Fig. 1 shows a perspective view of a body 1 of an unmanned aerial vehicle (UAV), seen from above where the UAV comprises a housing 3, having a first part 5 and a second part 7. The first part 5 comprises a first surface 9 and a second surface 11 (seen in Fig. 2), and the second part 7 comprises a first surface 13 and a second surface 15. The first surface 9, 13 of the first part 5 and the second part 7 may be an outer surface of the housing, where the outer surface faces the surrounding environment of the UAV. The second surface 11, 15 of the first part 5, and the second part 7 may be an inner surface of the housing 3, where the inner surface may define an inner cavity 15 of the housing, where the inner cavity 15 has a predefined volume, where the cavity is capable of housing at least part of the electrical components 17 of the UAV 1.

The first part 5 of the housing 3 may be an upper part of a housing, and the second part 7 of the housing 3 may be a lower part of a housing 3, where the first part 5 has a first connecting part 19 and the second part has a second connecting part 21, where the first 19 and the second connecting parts may be joined to be in connection with each other when the housing 3 is closed. The outer surface 9, 13 of the housing 3 has a plurality of mounting parts 23, where the mounting parts 23 may be utilized to mount peripheral devices (not shown) to the outer surface 9, 13 of the housing 3.

The UAV 1 may further comprise a base plate 29 which is configured to be mounted inside the cavity 15 of the housing. The base plate has a plurality of electrical components 31, where the electrical components may be in the form of controllers, memory, processors, communication devices, accelerometers, gyroscopes, positioning devices, optical sensors, thermal sensors or other electrical components that are necessary or advantageous for the operation of a UAV. The base plate 29 may form a chassis for the electrical components 31, where the base plate may comprise a plurality of circuit boards 33, where the circuit boards provide a mechanical support and electrical connections to electric or electronic components, where the circuit boards may comprise conductive tracks or connections that allow the electrical components to send and receive signals from each other.

The base plate 29 is provided with support parts 35, where the support parts 35 may provide connection between the base plate 29 and an inner surface 11, 15 of the first part 5 and/or the second part 7 of the housing 3. The support parts 35 may be in the form of vibration isolation parts, which ensures that any vibration that occur or affects the housing is not transferred directly to the base plate 29. In this example, the support parts 35 may be indirectly connected to the base plate 29, via rotor arm connectors 37, where the housing 3 shown in this embodiment comprises four rotor arm connectors 37, which are located on opposite corners of the base plate and/or the housing. The support parts 35 and/or the rotor arm connectors 37 are provided with vibration dampening or vibration reduction parts, where mechanical waves that originate in the housing 3 and/or the rotor arms are dampened before reaching the base plate 29.

The rotor arm connectors 37 are provided with a mechanical fastening device 39 and electrical connectors 41, where the electrical connectors allow power and data to be transferred via matching connectors to the rotor arms, to provide control signals and power to the propulsion devices (not shown). The mechanical fastening device 39 may have an open position, where the arm may be inserted into the connector opening 43, and where the mechanical fastening device may have a closed position, where the rotor arm is fixed inside the connector opening 43, and thereby fixing the rotor arm (not shown) to the housing/ base plate. The first and second half of the housing may comprise openings 45 that accommodate the rotor arm connectors 37 and allow access to the connector openings 45 from the outside.

The first part 5 may further comprise a first connector opening 25, second connector opening 47 (seen in Fig. 2) and/or a third connector opening 49 (seen in Fig. 2), where a first electrical connector 27, a second electrical connector 51 (seen in Fig. 2) and/or a third electrical connector 53 (seen in Fig. 2) may be positioned, allowing access from the outside of the housing 3 and into the cavity 15 of the housing, allowing one or more of the electrical devices to communicate with the electric components 31 of the base plate 29. The electrical connectors 27, 51, 53 may extend from the inside of the cavity, and have access from the outside of the housing.

Fig. 2 shows a perspective view of a body 1 of an unmanned aerial vehicle (UAV), seen from below. The base plate 29 may comprise an electrical component 59, where the electrical component may e.g. be a processor or other electrical components that create a significant amount of thermal energy and may require cooling to operate optimally. The second part 7 of the housing 3 may comprise a thermal conductor 55, where the thermal conductor may be capable of transmitting thermal energy from the inside of the cavity 15 to the outer environment 57. The electrical component 59 may be in thermal communication with the thermal conductor 55, where the thermal communication may e.g. be via a thermal pad 61. The thermal pad may have a first surface 63 and a second surface 65, where the first surface 63 is in communication with a surface area 67 of the electrical component 59, allowing thermal energy to be transferred from the electrical component and into the thermal pad 61. The second surface 65 of the thermal pad 61 may be in contact with an inner surface of the thermal conductor 55, where the thermal energy present in the thermal pad 61 may be transferred from the inside of the cavity and to the outside of the second part 7, where the outer surface 15 of the second part may be cooled down by the outer environment 57 and the thermal energy may dissipate into the environment. Thus, the thermal energy originating in the electrical component 59 may be transferred to the outside of the housing via the thermal conductor 55 and the thermal pad 61.

The thermal conductor 55 may have a high heat transfer rate, where in one example may mean that the thermal conductor 55 may be made of a metal substance, such as an aluminium alloy. In another example, the thermal conductor 55 may be in the form of the second part 7 of the housing, where the entire second part 7 may be in the form of the thermal conductor. This may occur when the second part 7 may be made of a metallic substance, such as an aluminium alloy. Furthermore, the thermal conductor 55 may also include the first part 5 of the housing 3, where the first part of the housing may be made of a metallic substance, such as an aluminum alloy. Thus, the entire housing may have a high heat transfer rate, so that the heat transferred from the electrical component 59 and into the second part 5 via the thermal pad 61 may be stored and distributed inside the entire first part, and/or the second part.

To improve the thermal communication between the first part 5 and the second part 7 the first connecting part 19 and the second connecting part of the housing may be in thermal communication, where the interface between the first connecting part 19 and the second connecting part may comprise a thermal seal 69, where the thermal seal may seal the cavity 15 from the environment and may have a high heat transfer rate, to allow thermal energy to be transferred from the first part 5 to the second part 7, or vice versa.

The propulsion device, such as a plurality of rotors, will ensure that the outer surface 9, 13 of the housing 3 will be provided with a large amount of moving air, where the air can cool the housing 3, allowing the thermal energy to be dissipated from the housing 3 rapidly. Alternatively, the thermal transfer of the housing, and/or the natural convection of the cooling air of the housing 3, may be large enough not to require any forced air to cool the electrical components 59, allowing the UAV to operate effectively even though it is not in flight, or the propulsion device is not in action.

Any heat that is collected inside the cavity 15 may be naturally transferred into the inner surface 11, 15 of the housing 3, allowing thermal energy to be transferred out of the housing.

The provision of a housing 3 in an aluminium alloy may ensure that the housing operates as a faraday cage, where the aluminium alloy may be used to block electromagnetic fields, and thereby reduce the electrical noise that may affect the UAV 1.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 1: Body UAV
- 3: Housing
- 5: First part of housing
- 7: Second part of housing
- 9: First surface of first part
- 11: Second surface of first part
- 13: First surface of second part
- 15: Second surface of second part
- 17: Electrical components
- 19: First connecting part
- 21: Second connecting part
- 23: Mounting parts
- 25: First connector opening
- 27: First electrical connector
- 29: Base plate
- 31: Electrical component
- 33: Circuit board
- 35: Support part
- 37: Rotor arm connector
- 39: Mechanical fastening device
- 41: Electrical connection
- 43: Connector opening
- 45: Opening in housing
- 47: Second connector opening
- 49: Third connector opening
- 51: Second electrical connector
- 53: Third electrical connector
- 55: Thermal conductor
- 57: Outer environment
- 59: Electrical component (CPU)
- 61: Thermal pad
- 63: First surface of thermal pad
- 65: Second surface of thermal pad
- 67: A surface area of electrical component
- 69: Thermal seal

## Claims

1. An unmanned aerial vehicle comprising:
- a housing comprising an outer surface and an inner surface that forms a cavity,
- at least one propulsion device adapted to move the chassis in three dimensions,
- one or more first electrical components configured to provide a controller that generates and/or receives flight control signals indicating a position of the unmanned aerial vehicle in air space and wherein the flight controller controls the flight propulsion device to move the UAV to locations in the space indicated by the flight control signals,
- wherein the housing comprises a thermal conductor, having an inner surface and an outer surface, where the outer surface faces the surrounding environment, and the inner surface is in thermal communication with the at least one or more electrical components.

2. An unmanned aerial vehicle in accordance with claim 1, wherein the housing comprises a first part and a second part.

3. An unmanned aerial vehicle in accordance with claim 2, wherein the first part of the housing is in thermal communication to the second part of the housing.

4. An unmanned aerial vehicle in accordance with any of the preceding claims, wherein the inner surface of the thermal conductor corresponds to the inner surface of the housing, and/or the outer surface of the thermal conductor corresponds the outer surface of the housing.

5. An unmanned aerial vehicle in accordance with any of the preceding claims, wherein the thermal conductor may have a heat transfer rate above 10 W/mK, more specifically above 20 W/mK, more specifically above 50 W/mK, or more specifically above 100 W/mK.

6. An unmanned aerial vehicle in accordance with any of the preceding claims, wherein the housing is constructed of a material that is at least 40% of a metallic composition, more specifically at least 60% of a metallic composition, more specifically at least 80% of a metallic composition.

7. An unmanned aerial vehicle in accordance with any of the preceding claims, wherein the housing is made of a material comprising an aluminium alloy.

8. An unmanned aerial vehicle in accordance with any of the preceding claims, wherein the one or more first electrical components are positioned on an electrical base plate.

9. An unmanned aerial vehicle in accordance with any of the preceding claims, wherein the electric base plate is attached with the inner surface of the housing, and where a vibration dampening device is provided between the housing and the base plate to dampen vibration from the housing to the electric base plate.

10. An unmanned aerial vehicle in accordance with any of the preceding claims, wherein the thermal communication between the one or more electrical components and the housing is in the form of a thermal element having a first surface being in contact with the one or more electrical component and a second surface being in contact with the inner surface of the thermal conductor.

11. An unmanned aerial vehicle in accordance with any of the preceding claims, wherein the thermal element is a vibration dampening element, such as paraffin wax silicon compound comprising thermal conductive powder and/or a thermal paste.

12. An unmanned aerial vehicle in accordance with any of the preceding claims, wherein the housing comprises one or more connectors for attaching a rotor arm to the housing, where the connector may comprise electrical connections for powering and controlling the rotor and/or mechanical connection for mechanically fixing the rotor arm to the housing.

13. An unmanned aerial vehicle in accordance with any of the preceding claims, wherein the housing may comprise one or more electrical and/or data interfaces at an outer surface of the housing.

14. An unmanned aerial vehicle in accordance with any of the preceding claims, wherein the unmanned aerial vehicle is a multi-rotor vehicle, where the propulsion device comprises at least 4 rotors and at least one electrical motor to propel the at least 4 rotors.

15. An unmanned aerial vehicle in accordance with any of the preceding claims, wherein the housing comprises at least a first attachment device, configured to attach a peripheral device to the housing.
